# EUROPEAN PATENT APPLICATION

(11) **EP 2 312 759 A1**
(43) Date of publication of application: **20.04.2011**
(21) Application number: 09804902.6
(22) Date of filing: 23.07.2009
(51) Int. Cl.: H04B 1/04, H04B 1/40, H04M 1/00

(54) **WIRELESS COMMUNICATION DEVICE, WIRELESS COMMUNICATION METHOD, WIRELESS COMMUNICATION SYSTEM, AND COMPUTER-READABLE RECORDING MEDIUM ON WHICH CONTROL PROGRAM OF WIRELESS COMMUNICATION DEVICE HAS BEEN RECODED**

(30) Priority: 06.08.2008 JP 2008202503
(71) Applicant: NEC Corporation, Minato-ku Tokyo 108-8001 (JP)
(72) Inventor: HOSOMI, Takahiro, Tokyo 108-8001 (JP)
(74) Representative: Vossius & Partner
(86) International application number: PCT/JP2009/063538
(87) International publication number: WO 2010/016418

(57) **Abstract**

To prevent temperature rise caused by increase in communication speed and increase in output power and to provide a mobile terminal device which has a small size and is of low cost, a wireless communication device comprises: a detection means for detecting the temperature inside the device; and a control means for, when the temperature detected by the detection means becomes a preset first threshold value or more, restricting the maximum value of the transmission speed that a self-device can achieve.

## Description

### TECHNICAL FIELD

The present invention relates to a wireless communication apparatus, a wireless system, a wireless communication method thereof and a storage medium storing a program of the wireless communication apparatus and in particular, relates to a wireless communication technology to change a communication parameter according to the communication condition.

### BACKGROUND ART

In recent years, speed of uplink communication of a portable terminal, that is, speed of communication from the portable terminal to a base station becomes high. Generally, high speed communication causes to generate an amount of heat increasingly. For this reason, the heat design becomes necessary so that surface temperature of the portable terminal apparatus may be lower than the highest allowable temperature. The highest allowable temperature is specified by law, a quality standard of a communication operator and a quality standard of a manufacturer.

For the heat design, there is a method to leave a space between a heat generating component and a surface of a chassis of the portable terminal, and to arrange a layer of air between the heat generating component and the surface of the chassis of the portable terminal. The method makes a heat transfer coefficient small and consequently, makes heat hardly conducts to the surface of the chassis of the portable terminal. As another example of the heat design method, there is a method to diffuse heat, which is generated by the heat generating component, by use of heat conducting material to prevent to be heated locally. Graphite, metal and metallic filler gel are exemplified as the heat conducting material.

Patent document 1 discloses a configuration of a portable terminal in which an endothermic component is arranged oppositely to one surface of a printed wiring board on which electronic components are mounted.

Patent document 2 discloses a fold type portable terminal whose almost whole area of an inner surface of a first and a second chassis is covered with a heat diffusing sheet.

Patent document 3 discloses a mobile terminal which has a function to change transmiting output level or data transferring rate in the case that temperature, which is detected by a built-in temperature sensor, exceeds a threshold level.

Patent document 4 discloses a wireless communication apparatus which has a function to change data transferring rate in the case that temperature, which is detected by a built-in temperature sensor, exceeds a threshold level.
[Patent document 1] Japanese Patent Application Laid-Open No. 2008-131512
[Patent document 2] Japanese Patent Application Laid-Open No. 2008-022417
[Patent document 3] Japanese Patent Application Laid-Open No. 2000-083009
[Patent document 4] Japanese Patent Application Laid-Open No. 2002-300050

### DISCLOSURE OF THE INVENTION

### TECHNICAL PROBLEM

According to the configuration disclosed in the patent documents 1 and 2, a component for diffusing generated heat is arranged within the chassis. To mount the component for diffusing heat within the chassis causes a rise in price and enlargement in size of the portable terminal. Moreover, there is possibility that structure design flexibility is restricted by arranging the heat diffusing component, and consequently, a development cost also increases.

According to the configuration of the terminal disclosed in the patent documents 3 and 4, the terminal changes the transmitting output level and the data transferring rate internally in the case that temperature, which is detected by the temperature sensor of the terminal, exceeds the threshold level. However, according to the configuration disclosed in the patent documents 3 and 4, the transmitting output level and the data transferring rate are changed independently by the terminal. For this reason, there is a possibility that a communication condition, which the terminal changes, is different from a communication condition which a base station expects of the terminal and consequently, the terminal and the base station can not normally communicate each other.

An object of the present invention is to provide a wireless communication apparatus, a wireless communication method, a wireless communication system and a program used in the wireless communication apparatus, which restrain a rise in temperature of the wireless communication apparatus due to the generated heat and make it possible in parallel to realize a small size, low power consumption and low cost of the wireless communication apparatus.

### TECHNICAL SOLUTION

A wireless communication apparatus according to the present invention includes a sensing means for sensing internal temperature, and a control means for carrying out a procedure to transmit first data to a base station in the case that the internal temperature becomes not lower than a predetermined first threshold level, and to set a first communication parameter on the basis of a first response which the base station issues in reply to the first data.

A wireless communication apparatus according to the present invention includes a sensing means for sensing internal temperature, and a control means for transmitting first data to a base station in the case that the internal temperature becomes not lower than a predetermined first threshold level, and for setting a first communication parameter on the basis of a response which the base station issues in reply to the first data, and for transmitting second data to the base station in the case that the internal temperature becomes not lower than a predetermined second threshold level, and for setting a second communication parameter on the basis of a response which the base station issues in reply to the second data.

A wireless communication method according to the present invention senses internal temperature, and transmits first data to a base station in the case that the internal temperature becomes not lower than a predetermined first threshold level, and sets a first communication parameter on the basis of a first response which the base station issues in reply to the first data.

A wireless communication method according to the present invention senses internal temperature, and transmits first data to a base station in the case that the internal temperature becomes not lower than a predetermined first threshold level, and sets a first communication parameter on the basis of a response which the base station issues in reply to the first data, and transmits second data to the base station in the case that the internal temperature becomes not lower than a predetermined second threshold level, and sets a second communication parameter on the basis of a response which the base station issues to the second data.

A computer-readable storage medium according to the present invention stores a control program of a wireless communication apparatus for making a computer carry out a process of making a sensing means sense internal temperature and a process of making a control means transmit first data to a base station in the case that the internal temperature becomes not lower than a predetermined first threshold level, and of making the control means set a first communication parameter on the basis of a first response which the base station issues in reply to the first data.

A computer-readable storage medium according to the present invention stores a control program of a wireless communication apparatus for making a computer carry out a process of making a sensing means sense internal temperature and a process of making a control means transmit first data to a base station in the case that the internal temperature becomes not lower than a predetermined first threshold level, and of making the control means set a first communication parameter on the basis of a response which the base station issues in reply to the first data, and of making the control means transmit second data to the base station in the case that the internal temperature becomes not lower than a predetermined second threshold level, and of making the control means set a second communication parameter on the basis of a response which the base station issues in reply to the second data.

### ADVANTAGEOUS EFFECT OF THE INVENTION

According to the present invention, it is possible to obtain an effect of restraining a rise in temperature and an increase in power consumption of the wireless communication apparatus due to the high speed communication and the high level output, and restraining the enlargement in size and the rise in price of the wireless communication apparatus in parallel.

### BRIEF DESCRIPTION OF THE DRAWINGS

[FIG. 1] shows a configuration of a wireless communication system and a configuration of a portable terminal which are used commonly in a first to a fifth exemplary embodiments of the present invention.
[FIG. 2] shows an operation procedure carried out by a portable terminal 1 and a communication procedure carried out between the portable terminal 1 and a base station 2 according to the first exemplary embodiment of the present invention.
[FIG. 3] shows an operation procedure carried out by a portable terminal 1 and a communication procedure carried out between the portable terminal 1 and a base station 2 according to the second exemplary embodiment of the present invention.
[FIG. 4] shows an operation procedure carried out by a portable terminal 1 and a communication procedure carried out between the portable terminal 1 and a base station 2 according to the third exemplary embodiment of the present invention.
[FIG. 5] shows an operation procedure carried out by a portable terminal 1 and a communication procedure carried out between the portable terminal 1 and a base station 2 according to the fourth exemplary embodiment of the present invention.
[FIG. 6] shows an operation procedure carried out by a portable terminal 1 and a communication procedure carried out between the portable terminal 1 and a base station 2 according to the fifth exemplary embodiment of the present invention.
[FIG. 7] is a block diagram showing an example of a configuration of a portable terminal according to a sixth exemplary embodiment of the present invention.
[FIG. 8] is a flowchart showing an example of an operation of the portable terminal according to the sixth exemplary embodiment of the present invention.
[FIG. 9] is a flowchart showing an example of an operation of the portable terminal according to the sixth embodiment of the present invention.
[FIG. 10] shows a configuration of a wireless communication apparatus according to a seventh exemplary embodiment of the present invention.
[FIG. 11] shows a configuration of a wireless communication system and a configuration of a portable terminal which are related to the present invention.

### BEST MODE FOR CARRYING OUT THE INVENTION

Next, an exemplary embodiment of a wireless communication apparatus according to the present invention will be described with reference to drawings.

A portable terminal, which is described in a first to a fifth exemplary embodiment, is used in a wireless communication system in which high speed uplink packet communication is carried out between the portable terminal and a base station 2.

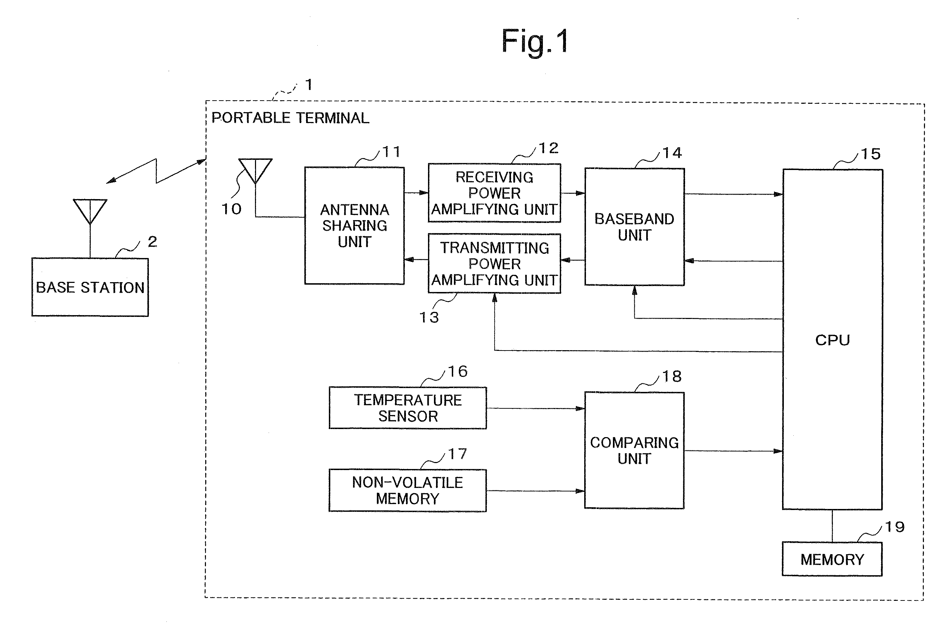

FIG. 1 shows a configuration of the wireless communication system and a configuration of the portable terminal which are used commonly in the first to the fifth exemplary embodiments of the present invention. According to FIG. 1, a portable terminal 1 includes an antenna 10, an antenna sharing unit 11, a receiving power amplifying unit 12 and a transmitting power amplifying unit 13. Furthermore, the portable terminal 1 includes a baseband unit 14, CPU (Central Processing Unit) 15, a temperature sensor 16, a non-volatile memory 17, a comparing unit 18 and a memory 19. Then, the portable terminal 1 carries out wireless communication with the base station 2 via the antenna 10. The transmitting power amplifying unit 13 controls transmitting power on the basis of a direction which is issued by CPU 15 on the transmitting power. The baseband unit 14 controls speed of transmitting data on the basis of information which is issued by CPU 15 on the maximum transmitting data rate information. The antenna sharing unit is a circuit to enable the receiving power amplifying unit 12 and the transmiting power amplifying unit 13 to share one antenna.

CPU 15 works according to a program which is stored in the memory 19. Moreover, CPU 15 has a function to determine the transmitting power and the transmiting data rate of the portable terminal 1.

First, the first exemplary embodiment of the present invention will be described.

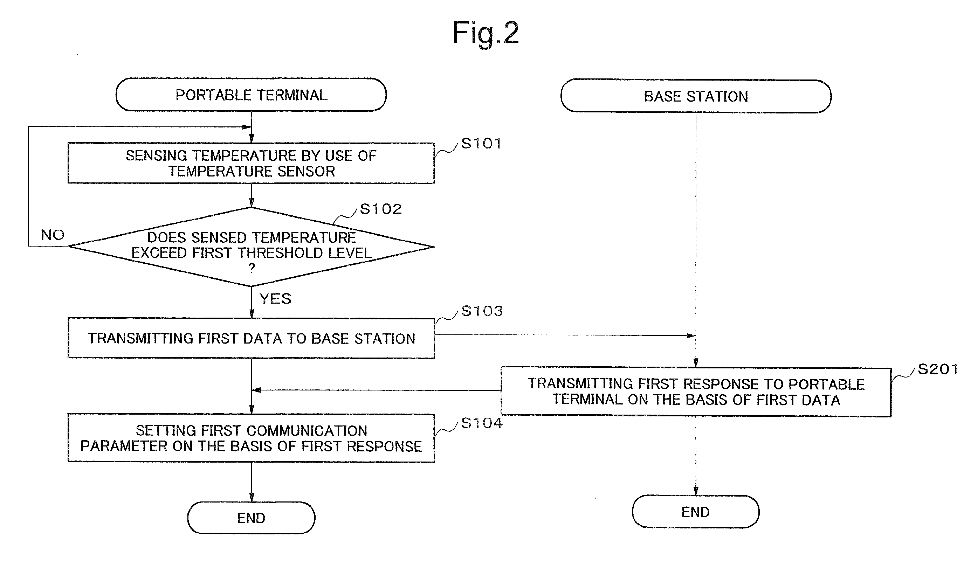

FIG. 2 shows an operation procedure carried out by the portable terminal 1 and a communication procedure carried out between the portable terminal 1 and the base stations 2 according to the first exemplary embodiment. First, an operation of the portable terminal 1 according to the first exemplary embodiment will be described with reference to FIG. 1 and FIG. 2.

According to the first exemplary embodiment, the portable terminal 1 carries out high speed uplink packet communication. Further, it may be preferable that the operation of the portable terminal 1, which will be described hereinafter, is realized by CPU 15's executing a program stored in the memory 19.

The operation of the portable terminal 1 according to the first exemplary embodiment will be described with reference to FIG. 2.

The portable terminal 1 senses temperature by use of the temperature sensor 16 (S101). In the case that the sensed temperature exceeds a first threshold level which is stored in the non-volatile memory 17 (YES in S102), the portable terminal 1 transmits first data to the base station 2 (S103).

The base station 2 transmits a first response to the portable terminal 1 on the basis of the first data which is received from the portable terminal 1 (S201).

The portable terminal 1 sets a first communication parameter on the basis of the first response which is issued by the base station (S104).

According to the above mentioned operation, the portable terminal 1 transmits the first data to the base station 2 in the case that the sensed temperature exceeds the first threshold level. Then, the portable terminal 1 sets the first communication parameter on the basis of the first response which the base stations issues in reply to the first data.

Here, it may be preferable that the first communication parameter is set so as to make the data rate or the transmitting power of the portable terminal 1 low.

By lowering the data rate of the portable terminal 1, heating value of CPU 15 decreases since power consumption of CPU 15 decreases. Moreover, by lowering the transmitting power of the portable terminal 1, heating value of the transmitting power amplifying unit 13 becomes decreasing. Accordingly, by setting the first communication parameter so that the heating value of the portable terminal 1 may decrease, it is possible to restrain a rise in temperature of the portable terminal 1.

As mentioned above, the portable terminal 1 according to the first exemplary embodiment sets the communication condition on the basis of the direction issued by the base station in the case that the temperature exceeds the threshold level. As a result, the portable terminal according to the first exemplary embodiment has an effect that it is possible to restrain the rise in temperature by changing the communication parameter of the portable terminal and adjusting the communication condition with the base station in parallel.

Moreover, the portable terminal according to the first exemplary embodiment has another effect that it is possible to restrain enlargement in size and a rise in price of the portable terminal, since the portable terminal does not use a special structure and special material for restraining the rise in temperature.

Next, the second exemplary embodiment of the present invention will be described. A configuration of the portable terminal 1 according to the second exemplary embodiment is similar to one which is described in the first exemplary embodiment by use of FIG. 1.

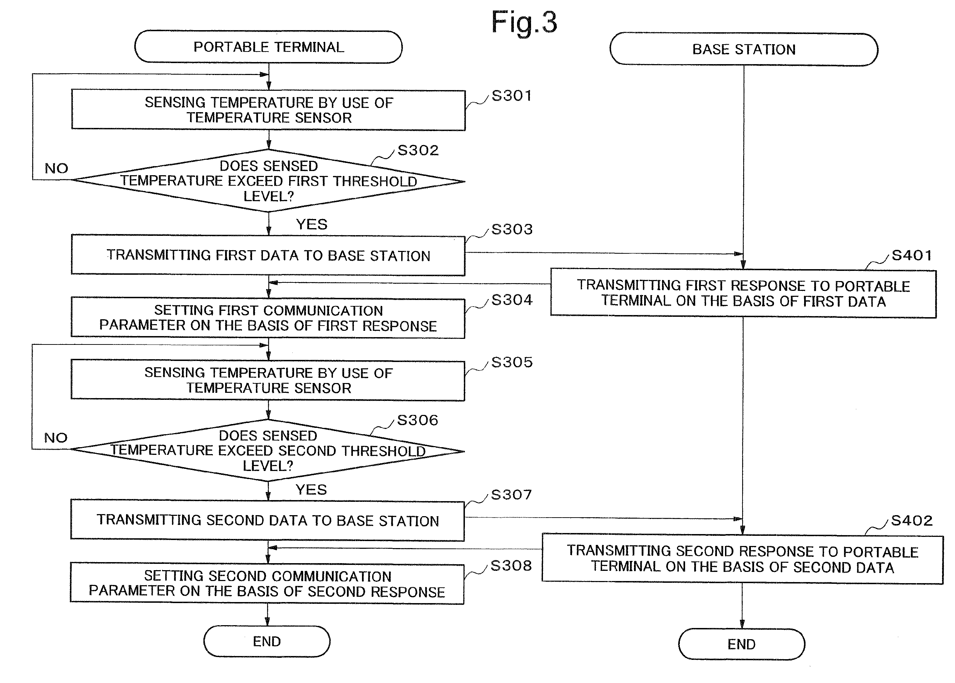

FIG.3 shows an operation procedure carried out by the portable terminal 1 and a communication procedure carried out between the portable terminal 1 and the base stations 2 according to the second exemplary embodiment of the present invention. An operation of the portable terminal 1 according to the second exemplary embodiment will be described with reference to FIG. 1 and FIG. 3.

The portable terminal 1 senses temperature by use of the temperature sensor 16 (S301). In the case that the sensed temperature exceeds a first threshold level which is stored in the non-volatile memory 17 (YES in S302), the portable terminal 1 transmits first data to the base station 2 (S303).

The base station 2 transmits a first response to the portable terminal 1 on the basis of the first data which is received from the portable terminal 1 (S401).

The portable terminal 1 sets a first communication parameter on the basis of the first response which is issued by the base station (S304). Then, the portable terminal 1 continues to sense temperature by use of the temperature sensor (S305).

In the case that the sensed temperature exceeds a second threshold level (YES in S306), the portable terminal 1 transmits a second data to the base station 2 (S307).

The base station 2 transmits a second response to the portable terminal 1 on the basis of the second data which is received from the portable terminal 1 (S402).

The portable terminal 1 sets a second communication parameter on the basis of the second response which is issued by the base station (S308).

As mentioned above, the portable terminal 1 repeats continuously the procedure which is described in the first exemplary embodiment by use of FIG. 2. It may be feasible that the first threshold level, the second threshold level, contents of the first data and contents of the second data in the first procedure (Steps S301 to 5304)are different from ones in the second procedure (Steps S305 to S308) respectively. Moreover, it may be feasible that contents of the first response, contents of the second response, contents of the first communication parameter and contents of the second communication parameter are different similarly. For example, it may be feasible that temperature corresponding to the second threshold level is set to be higher than temperature corresponding to the first threshold level. Moreover, it may be feasible that, in the case that temperature of the portable terminal 1 rises still after carrying out the first procedure, the second communication parameter is set so that the second communication parameter has more significant effect of restraining the rise in temperature than the first communication parameter has.

Here, any one of the data rate and the transmitting power may be used as the first and the second communication parameters which are set to the portable terminal 1. For example, it may be feasible that the data rate of the portable terminal 1 is set in Step S304 and the transmitting power of the portable terminal 1 is set in Step S308. It may be also preferable that the transmitting power is set in Step S304 and the data rate is set in Step S308 conversely. It may be also feasible that different data rates are set in Steps S304 and S308 respectively. Moreover, it may be feasible that different transmitting powers are set in Steps S304 and S308 respectively.

According to the second exemplary embodiment, the portable terminal 1 transmits the first data to the base station in the case that the temperature exceeds the first threshold level, as mentioned above. Then, the portable terminal 1 sets the first communication parameter on the basis of the first response which is issued by the base station. Afterward, the portable terminal 1 transmits the second data to the base station in the case that the temperature exceeds the second threshold level. Then, the portable terminal 1 sets furthermore the second communication parameter on the basis of the second response which is issued by the base station. That is, the portable terminal 1 sets the second communication parameter in the case that the temperature of the chassis exceeds the second threshold level after setting the first communication parameter, according to the second exemplary embodiment. As mentioned above, the portable terminal 1 according to the second exemplary embodiment sets a plurality of communication parameters according to an extent of the rise in temperature. For this reason, the portable terminal 1 according to the second exemplary embodiment has an effect that it is possible to set the communication parameter more finely in addition to the effect described in the first exemplary embodiment.

Next, the third exemplary embodiment of the present invention will be described. A configuration of the portable terminal 1 according to the third exemplary embodiment is similar to the configuration which is described in the first exemplary embodiment by use of FIG. 1.

The portable terminal 1 according to the third exemplary embodiment selects MCS (Modulation and Coding Scheme) on the basis of a direction which is issued by the base station 2, and uses the selected MCS in communication.

Here, MCS will be described. MCS is defined as a combination of communication parameters including modulation scheme for transmitting data, error correction coding rate and number of applied codes, which are used in a wireless transmission system having a function to change the communication parameter according to a change of the wireless environment. That is, MCS is a set of the communication parameters whose values are different each other. MCS is prepared correspondingly to each of plural transmission rates.

According to a change of the wireless communication environment, the portable terminal 1 selects MCS, which is used in communication, on the basis of a direction which is issued by the base station 2. Then, the portable terminal transmits data on the basis of the communication parameter which is specified in the selected MCS. If other MCS is selected, the transmitting power changes dependently on the selected MCS in general.

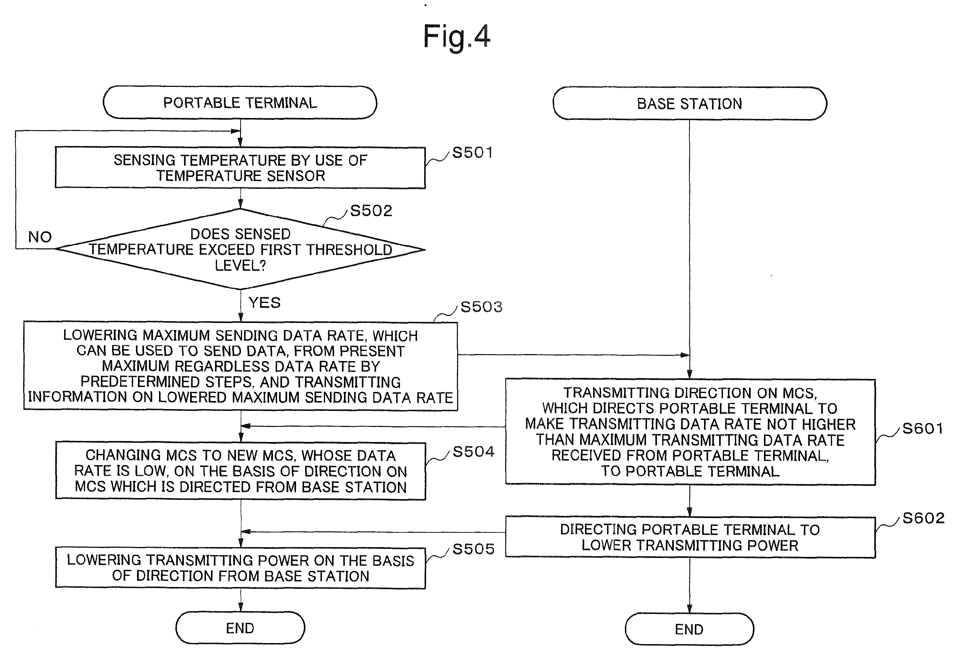

FIG. 4 shows an operation procedure carried out by the portable terminal 1, and a communication procedure carried out between the portable terminal 1 and the base stations 2 according to the third exemplary embodiment of the present invention.

The portable terminal 1 senses temperature by use of the temperature sensor 16 (S501). In the case that the sensed temperature exceeds a first threshold level which the non-volatile memory 17 stores (YES in S502), the portable terminal 1 lowers the maximum transmitting data rate, which can be used to transmit data to the base station, by predetermined steps from the present maximum transmitting data rate, and transmits information on the lowered maximum transmitting data rate (S503).

Further, Category in HSUPA (High Speed Uplink Packet Access) and LTE is exemplified as an example of the step of the data rate.

The base station 2 transmits a direction on MCS, which directs the portable terminal 1 to make the transmitting data rate of the portable terminal 1 not higher than the maximum transmitting data rate received from the portable terminal 1, to the portable terminal 1 (S601).

In the case that the present transmitting data rate of the portable terminal 1 is not lower than the maximum transmitting data rate which is reported to the base station in Step S503, the portable terminal 1 changes the present MCS to an MCS whose data rate is lower than the present data rate (S504). As a result, the amount of calculations of CPU 15 of the portable terminal 1 also becomes decreasing.

Moreover, as a result of the change of MCS from the present MCS to the MCS whose data rate is low, energy per one bit, which is required for the desired transmission quality, becomes decreasing. Accordingly, the base station 2 regards that the transmission quality is improved and then, directs the portable terminal 1 to lower transmitting power (S602). The portable terminal 1 lowers the transmitting power according to the direction (S505). As a result, power consumption of the transmitting power amplifying unit 13 becomes decreasing, and heat generation of the transmitting power amplifying unit 13 is restrained in low level.

According to the above mentioned operation, after the sensed temperature exceeds the first threshold level, the portable terminal 1 transmits the maximum transmitting data rate which can be used to transmit data to the base station 2. Then, the portable terminal 1 sets the transmitting data rate on the basis of the direction on MCS which is issued by the base station 2 in reply to the sent maximum transmitting data rate. In the case that the transmitting data rate of the portable terminal 1 decreases, power consumption of CPU 15 also decreases, and an amount of generated heat decreases. As a result, the portable terminal 1 according to the third exemplary embodiment has an effect that it is possible to restrain a rise in temperature of the portable terminal 1.

Moreover, the portable terminal 1 lowers the transmitting power on the basis of the direction, which is issued by the base station 2, in Step S505 according to the third exemplary embodiment. Since heat generation of the transmitting power amplifying unit 13 is restrained in low level as a result of lowering the transmitting power, the portable terminal 1 has another effect that it is possible to restrain heat generation of the portable terminal 1 furthermore.

As mentioned above, the portable terminal 1 according to the third exemplary embodiment has an effect that it is possible to restrain the rise in temperature as the portable terminal 1 adjusts the communication condition with the base station in parallel, similarly to the portable terminal 1 according to the first exemplary embodiment. Moreover, the portable terminal 1 according to the third exemplary embodiment has another effect that it is possible to restrain enlargement in size and a rise in price of the portable terminal since the portable terminal 1 does not use a special structure and special material for restraining the rise in temperature, similarly to the portable terminal 1 according to the first exemplary embodiment.

Further, the processes of Step S602 and Step S505 in FIG. 4 can be omitted. For example, in the case that the rise in temperature of the portable terminal 1 is restrained by virtue of the procedure up to Step S504, the portable terminal 1 may not carry out the process of S505, according to the third exemplary embodiment. The portable terminal 1 according to the third exemplary embodiment has an effect that it is possible to restrain the rise in temperature and the increase in power consumption of the portable terminal by decreasing the amount of calculations of CPU 15 with no use of the special structure even if Step S505 is not carried out.

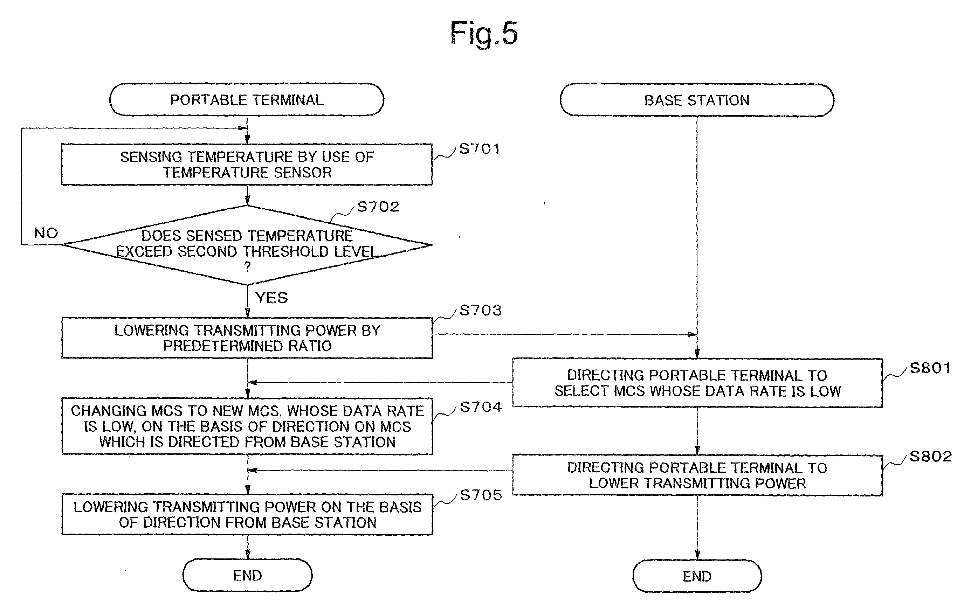

Next, the fourth exemplary embodiment of the present invention will be described with reference to FIG. 5. A configuration of the portable terminal 1 according to the fourth exemplary embodiment is similar to the configuration which is described in the first exemplary embodiment by use of FIG. 1. The portable terminal 1 stores a threshold level #2 (second threshold level) in the non-volatile memory 17.

FIG. 5 shows an operation procedure carried out by the portable terminal 1 and a communication procedure carried out between the portable terminal 1 and the base stations 2 according to the fourth exemplary embodiment of the present invention.

The portable terminal 1 senses temperature by use of the temperature sensor 16 (S701). In the case that the sensed temperature exceeds the second threshold level (YES in S702), the portable terminal 1 lowers the transmitting power by predetermined ratio with no relation to a direction from the base station 2 (S703).

By lowering the transmitting power, transmission quality between the portable terminal 1 and the base station 2, which the present MCS requires, can not be maintained. Accordingly, the base station 2 directs the portable terminal 1 to select MCS whose transmitting data rate is low (S801). Then, the portable terminal 1 changes the present MCS to an MCS whose transmitting data rate is low, on the basis of the direction from the base station (S704). As a result, the amount of calculations of CPU 15 of the portable terminal 1 also becomes decreasing.

By changing MCS to the new MCS whose data rate is low, energy per one bit, which is required for the desired transmission quality, becomes decreasing. For this reason, the base station 2 regards that the transmission quality is improved. Then, the base station 2 directs the portable terminal 1 to restrain the transmitting power in low level (S802). Since the portable terminal lowers the transmitting power according to the direction (S705), power consumption of the transmitting power amplifying unit 13 becomes decreasing. As a result, the portable terminal 1 can restrain furthermore heat generation of the transmitting power amplifying unit 13 in low level.

As mentioned above, the portable terminal 1 according to the fourth exemplary embodiment also changes the communication condition as the portable terminal 1 adjusts the communication condition with the base station 2 in parallel. As a result, the portable terminal 1 has an effect that it is possible to restrain a rise in temperature and an increase of power consumption of the portable terminal. Moreover, the portable terminal according to the fourth exemplary embodiment has another effect that it is possible to restrain enlargement in size and a rise in price of the portable terminal since the portable terminal does not use a special structure and special material for restraining the rise in temperature.

Further, the process of Step S705 in FIG. 5, which is carried out by the portable terminal 1, can be omitted. That is, in the case that the rise in temperature of the portable terminal 1 is restrained by virtue of the procedure up to Step S704, the portable terminal 1 may not carry out the process of S705, according to the fourth exemplary embodiment. The portable terminal 1 according to the fourth exemplary embodiment has an effect that it is possible to restrain the rise in temperature and the increase in power consumption of the portable terminal 1 by decreasing the amount of calculations of CPU 15 with no use of the special structure even if Step S705 is not carried out.

Here, it may be feasible that the first threshold level and the second threshold level in the third and the fourth exemplary embodiments respectively are determined at the time of design. By the above mention, it is possible to make surface temperature of the portable terminal 1 not higher than the highest allowable temperature (the highest temperature which is specified, for example by law, a quality standard of a communication operator, a quality standard of a manufacturer or the like).

Next, the fifth exemplary embodiment of the present invention will be described.

A portable terminal according to the fifth exemplary embodiment carries out the procedures of both the third and the fourth exemplary embodiments mentioned above.

A configuration of the portable terminal 1 according to the fifth exemplary embodiment is similar to the configuration which is described in FIG. 1.

The portable terminal 1 according to the fifth exemplary embodiment sets two temperature threshold levels, that is, a first threshold level and a second threshold level, and the first threshold level is set to be lower than the second threshold level.

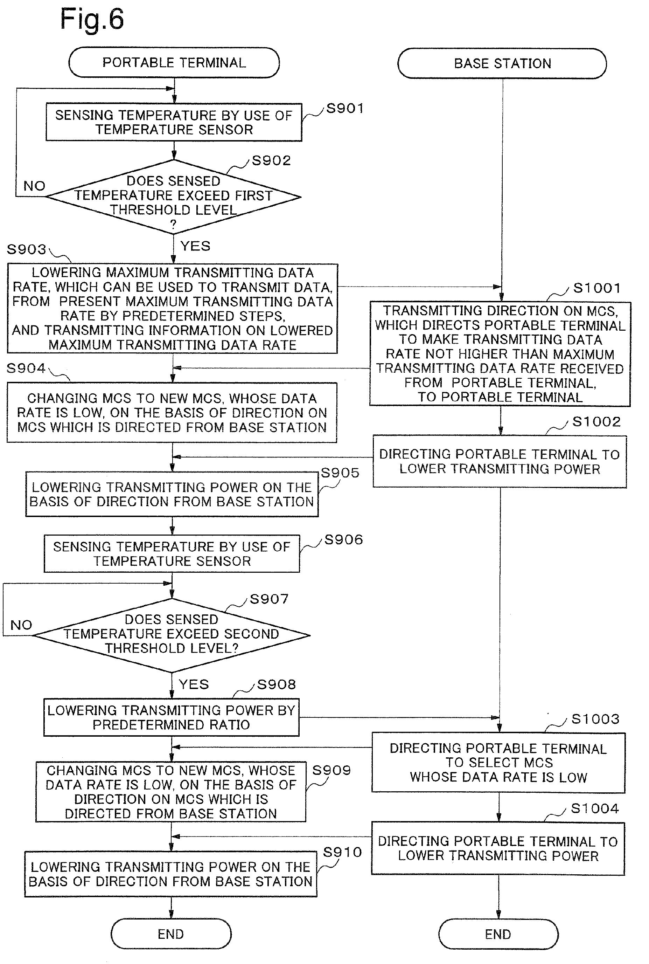

FIG. 6 is a flowchart showing an operation carried out by the portable terminal 1 and the base station 2 according to the fifth exemplary embodiment.

According to FIG. 6, the portable terminal 1 senses temperature by use of the temperature sensor 16 (S901). In the case that the sensed temperature exceeds the first threshold level (YES in S902), the portable terminal 1 lowers the maximum transmitting data rate, which can be used to transmit data to the base station, by predetermined steps from the present maximum transmitting data rate, and transmits information on the lowered maximum transmitting data rate (S903).

The base station 2 transmits a direction on MCS, which directs the portable terminal 1 to make the transmitting data rate of the portable terminal 1 not higher than the maximum transmitting data rate received from the portable terminal 1, to the portable terminal 1 (S1001).

In the case that the present transmitting data rate is not lower than the maximum transmitting data rate which is reported to the base station in Step S903, the portable terminal 1 changes MCS to an MCS whose data rate is low according to the direction on MCS which is issued by the base station (S904).

As a result of changing the present MCS to an MCS whose data rate is low, energy per one bit, which is required for the desired transmission quality, becomes decreasing. Therefore, the base station 2 regards that the transmission quality is improved, and directs the portable terminal 1 to lower the transmitting power (S1002). The portable terminal 1 lowers the transmitting power according to the direction (S905). As a result, power consumption of the transmitting power amplifying unit 13 becomes decreasing, and heat generation of the transmitting power amplifying unit 13 is restrained in low level.

In the case that the temperature of the portable terminal 1 still continue to rise even by carrying out the above-mentioned procedure, the following procedure is carried out as a next step.

That is, the portable terminal 1 senses the temperature by use of the temperature sensor 16 (S906). In the case that the sensed temperature exceeds the second threshold level (YES in S907), the portable terminal 1 lowers the transmitting power by predetermined ratio with no relation to a direction from the base station 2 (S908).

The transmission quality, which the present MCS requires, is not maintained between the portable terminal 1 and the base station 2 due to lowering the transmitting power. Therefore, the base station 2 directs the portable terminal 1 to select MCS with lower transmitting data rate(S1003). Then, the portable terminal 1 changes MCS to new MCS with lower transmitting data rate (S909). As a result, the transmitting data rate of the portable terminal 1 becomes decreasing and consequently, the amount of calculations of CPU 15 also becomes decreasing.

Moreover, energy per one bit, which is required for the desired transmission quality, becomes decreasing by changing MCS to new MCS with lower transmitting data rate. For this reason, the base station 2 judges that the transmission quality is improved. Then, the base station 2 directs the portable terminal 1 to restrain the transmitting power in low level (S1004). The portable terminal 1 lowers the transmitting power according to the direction (S910). Since the power consumption of the transmitting power amplifying unit 13 becomes decreasing as a result of lowering the transmitting power, the portable terminal 1 can restrain furthermore heat generation of the transmitting power amplifying unit 13 in low level.

As mentioned above, the portable terminal 1 according to the fifth exemplary embodiment tries firstly to restrain the rise in temperature by carry out the procedure according to the third exemplary embodiment. Then, in the case that the procedure according to the third exemplary embodiment cannot prevent the rise in temperature of the portable terminal 1 and consequently, temperature of the chassis exceeds the second threshold level, the procedure according to the fourth exemplary embodiment can restrain the rise in temperature. For this reason, the portable terminal 1 according to the fifth exemplary embodiment has an effect that it is possible to set the communication parameter finely according to an extent of the rise in temperature.

As mentioned above, the portable terminal according to the fifth exemplary embodiment changes the communication condition as the portable terminal adjusts the communication condition with the base station in parallel. Therefore, it is possible to prevent the rise in temperature and the increase of power consumption of the portable terminal. Moreover, also the portable terminal according to the fifth exemplary embodiment can restrain enlargement in size and a rise in price of the portable terminal as well as the portable terminal according to the third and the fourth exemplary embodiments since the portable terminal according to the fifth exemplary embodiment does not use a special structure and special material.

Further, in the case that a procedure described in Step S903 and Step S1001 and a procedure described in Step S908 and Step S1003 are exchanged each other, the exchanged procedures are also applicable as a modified example of the fifth exemplary embodiment.

A procedure of the modified example of the fifth exemplary embodiment will be described in the following. That is, in the case that the temperature exceeds the first threshold level (Yes in S902), the portable terminal 1 lowers the transmitting power by predetermined steps (S908). Then, the base station 2 directs the portable terminal 1 to use MCS with lower transmitting data rate(S1003). In the case that afterward, the temperature exceeds the second threshold level (Yes in S907), the portable terminal 1 lowers the present maximum transmitting data rate, which can be used to transmit data to the base station, by predetermined steps and transmits information on the lowered maximum transmitting data rate to the base station 2 (S903). Then, the base station 2 directs the portable terminal 1 to use MCS whose transmitting data rate is not higher than the maximum transmitting data rate.

According to the modified example of the fifth exemplary embodiment, the portable terminal 1 changes the communication condition as the portable terminal 1 adjusts the communication condition with the base station in parallel, as mentioned above. Therefore, it is possible to prevent the rise in temperature and the increase in power consumption of the portable terminal.

Furthermore, it is possible to omit the processes of Step 1002 and Step 905 out of the operation of the portable terminal 1 of the fifth exemplary embodiment shown in FIG. 6. Moreover, the processes of Step 1004 and Step 910 also can be omitted. For example, in the case that the temperature of the portable terminal 1 is restrained to be not higher than predetermined temperature by carrying out the procedure up to Step S904 or Step S909, it may be feasible that the subsequent process is not carried out.

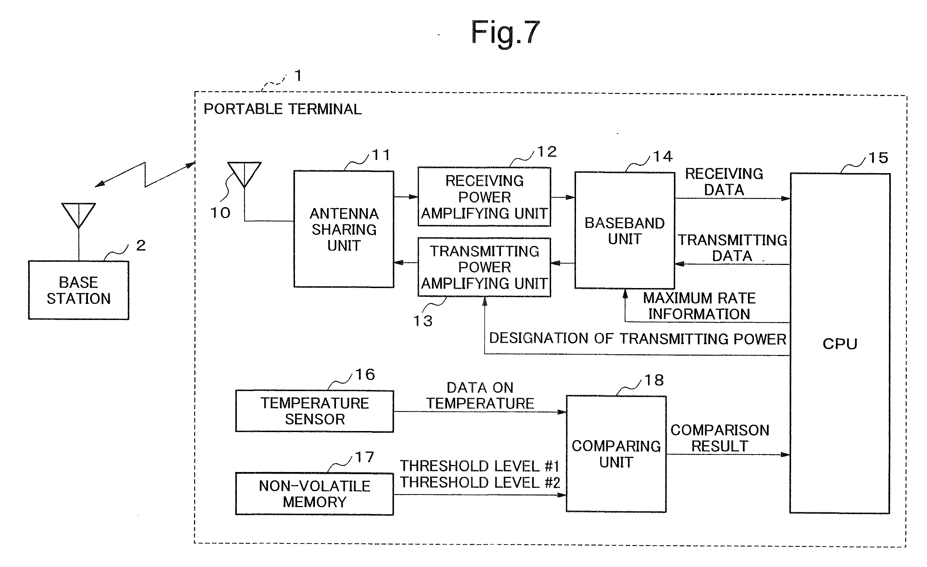

FIG. 7 is a block diagram showing an example of a configuration of a portable terminal according to a sixth exemplary embodiment of the present invention. According to FIG. 7, the portable terminal 1, which includes the antenna 10, the antenna sharing unit 11, the receiving power amplifying unit 12, the transmitting power amplifying unit 13, the baseband unit 14, CPU 15, the temperature sensor 16, the non-volatile memory 17 and the comparing unit 18, carries out wireless communication with the base stations 2 via the antenna 10. The transmitting power amplifying unit 13 is controlled on the basis of a direction on the transmitting power which is directed by CPU 15, and the baseband unit 14 is controlled on the basis of the maximum rate information which is provided by CPU 15.

The comparing unit 18 compares temperature, which is sensed by the temperature sensor 16, threshold levels #1 with #2 which are stored in the non-volatile memory 17, and informs CPU 15 of the comparison result. CPU 15 changes the direction on the transmitting power and the maximum rate information according to the comparison result by the comparing unit 18.

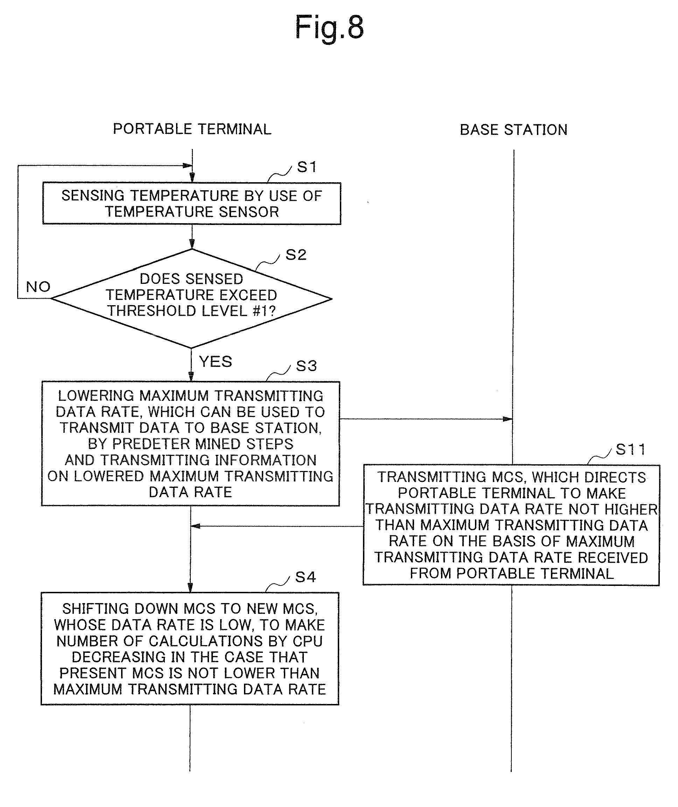

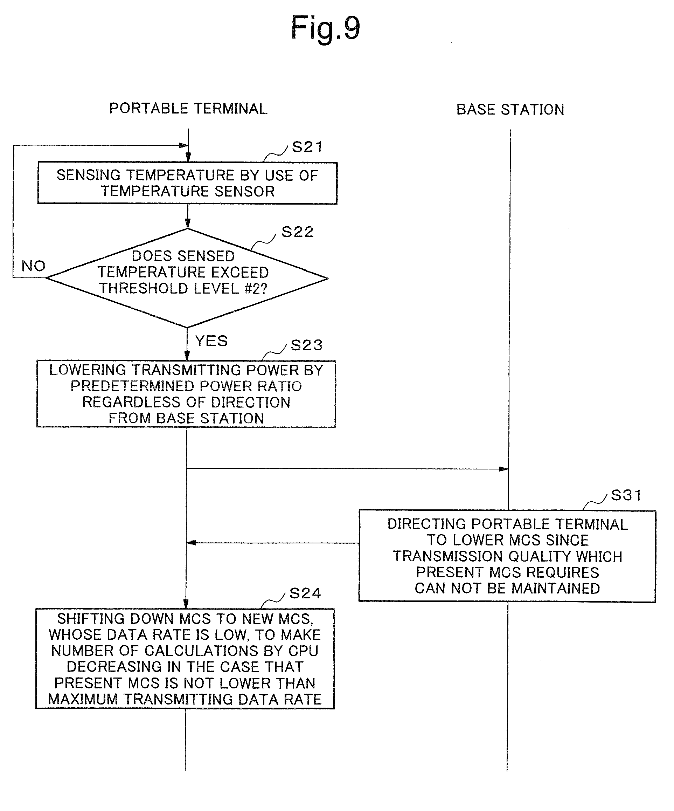

FIG. 8 and FIG. 9 are flowcharts respectively showing an example of operation carried out in the portable terminal 1 according to the sixth exemplary embodiment of the present invention. The example of the operation carried out in the portable terminal 1 according to the exemplary embodiment of the present invention will be described with reference to FIGs. 7 to 9. FIG. 8 shows a first mechanism in the exemplary embodiment of the present invention, and FIG. 9 shows a second mechanism in the exemplary embodiment of the present invention. It is assumed that the portable terminal 1 carries out high speed uplink packet communication. Further, the operation of the portable terminal 1 shown in FIG. 8 and FIG. 9 is realized by CPU 15's executing a program which is stored in a memory which is not shown in the figures.

Firstly, the first mechanism according to the sixth exemplary embodiment of the present invention will be described with reference to FIG. 8. The portable terminal 1 includes internally the temperature sensor 16 which senses internal temperature of the apparatus and stores the threshold level #1 (first threshold level) in the non-volatile memory 17.

In the case that the temperature sensed by the temperature sensor 16 exceeds the threshold level #1 (Steps S1 and S2 in FIG. 8), the portable terminal 1 lowers the maximum transmitting data rate [Category in HSUPA (High Speed Uplink Packet Access) and LTE (Long Term Evolution)], at which data can be transmitted to the base station 2, by predetermined steps, and transmits data at the lowered rate to the base station 2 (Step S3 in FIG. 8).

The base station 2 transmits MCS, which directs the portable terminal 1 to make the transmitting data rate not higher than the maximum transmitting data rate on the basis of the maximum transmitting data rate received from the portable terminal 1, to the portable terminal 1 (Step S11 in FIG. 8). In the case that the present MCS is not lower than the maximum transmitting data rate, the portable terminal 1 shifts down MCS to an MCS with lower data rate, to make the amount of calculations of CPU 15 decreasing (Step S4 in FIG. 8).

Moreover, the base station 2 regards that the transmission quality is improved since energy per one bit, which is required for the desired transmission quality, becomes decreasing, and then, directs the portable terminal 1 to restrain the transmitting power in low level. Since the portable terminal 1 lowers the transmitting power according to the direction to make the power consumption of the transmitting power amplifying unit 13 decreasing, it is possible to make heat generation of the transmitting power amplifying unit 13 restrained in low level.

Next, the second mechanism according to the sixth exemplary embodiment of the present invention will be described with reference to FIG. 9. The portable terminal 1 stores the threshold level #2 (second threshold level) in the non-volatile memory 17.

In the case that the temperature sensed by the temperature sensor 16 exceeds the threshold level #2 (Steps S21 and S22 in FIG. 9), the portable terminal 1 lowers the transmitting power by predetermined power ratio regardless of to a direction from the base station (Step S23 in FIG. 9).

According to the exemplary embodiment, since the transmission quality, which the present MCS requires, can not be maintained due to lowering the transmitting power and then, the portable terminal 1 receives the direction from the base station 2 to lower MCS (Step S31 in FIG. 9), it is possible to make number of calculations by CPU decreasing (Step S24 in FIG. 9).

Moreover, the base station 2 regards that the transmission quality is improved since energy per one bit, which is required for the desired transmission quality, becomes decreasing, and then, directs the portable terminal 1 to restrain the transmitting power in low level. Since the portable terminal 1 lowers the transmitting power according to the direction to make the power consumption of the transmitting power amplifying unit 13 decrease, it is possible to make heat generation of the transmitting power amplifying unit 13 restrained in low level.

According to the exemplary embodiment, if the threshold levels #1 and/or #2 are set appropriately, it is possible with comparative ease to make surface temperature of the portable terminal 1 not higher than the desired highest temperature (highest temperature which is specified, for example by law, a quality standard of a communication operator, a quality standard of a manufacturer or the like).

On the other hand, the second mechanism according to the exemplary embodiment has an issue that the transmission quality is deteriorated until the portable terminal 1 receives the direction from the base station 2 to lower MCS, since the portable terminal 1 lowers the transmitting power without consideration of the direction from the base station 2. Therefore, it is preferable that the threshold level #1 is set to be lower than the threshold level #2 so that the temperature may be not higher than the desired surface temperature surely by use of the threshold level #2 in the case that the rise in temperature can not be restrained even by use of the first mechanism.

That is to say, it may be preferable that the first mechanism and the second mechanism according to the present invention mentioned above work separately, but it is the best mode to make both mechanisms work continuously because of the issue of the second mechanism.

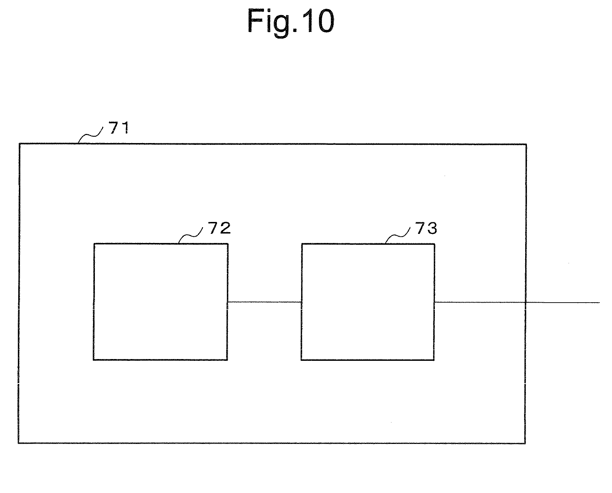

FIG. 10 shows a configuration of a wireless communication apparatus according to a seventh exemplary embodiment of the present invention. A wireless communication apparatus 71 shown in FIG. 10 includes a sensing means 72 and a control means 73.

The sensing means 72 senses internal temperature of the wireless communication apparatus 71. The control means 73 transmits first data to a base station, which is not shown in the figure, in the case that the temperature sensed by the sensing means 72 becomes not lower than a predetermined first threshold level. Then, the control means 73 sets a first communication parameter on the basis of a first response which is issued by the base station not shown in the figure in reply to the first data.

As mentioned above, the wireless communication apparatus 72, which has the configuration shown in FIG. 10, carries out a procedure to set the communication parameter on the basis of the response from the base station in the case that the temperature exceeds the first threshold level. Therefore, the wireless communication apparatus according to the seventh exemplary embodiment also has the effect that it is possible to restrain a rise in temperature and an increase in power consumption due to high speed communication and high level output, and to restrain the enlargement in size and the rise in price of the wireless communication apparatus in parallel.

Further, while the example that one temperature sensor 16 is used as the sensing means is described in the first to the sixth exemplary embodiments of the present invention, it may be preferable that a plurality of temperature sensors are arranged and a threshold level is set to each temperature sensor in the case that there are a plurality of heat generation places.

Moreover, it is also possible to apply a method to sense the temperature, for example by use of a heat dependent variable resistor such as a thermistor in place of the temperature sensor, and to carry out a process to interrupt CPU 15. Moreover, it is also possible to apply a method to sense the temperature, for example by use of an indirect way to monitor consumption current of each heat generating circuit in place of the temperature sensor.

While the present invention is described with reference to the first to the seventh exemplary embodiments as mentioned above, an applicable embodiment of the present invention is not limited to the exemplary embodiment mentioned above. It is possible to add various modifications, which are apparent to those skilled in the art, to the configurations and the details of the present invention within the scope of the present invention.

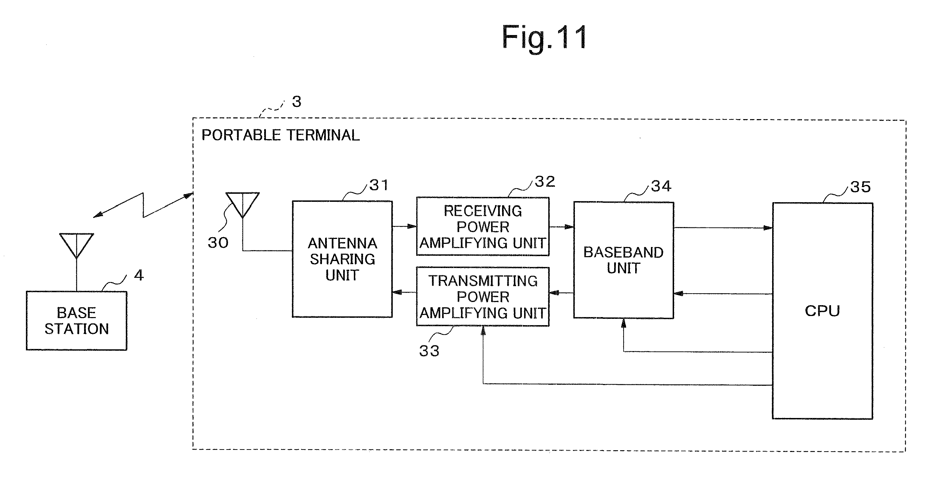

FIG. 11 shows configurations of a wireless communication system and a portable terminal which are related to the present invention. According to FIG. 11, a portable terminal 3 includes an antenna 30, an antenna sharing unit 31, a receiving power amplifying unit 32 and a transmitting power amplifying unit 33. Furthermore, the portable terminal 3 includes a baseband unit 34 and CPU 35. Then, the portable terminal 3 carries out wireless communication with a base station 4 via the antenna 30. The transmitting power amplifying unit 33 is controlled on the basis of a direction on the transmitting power which is directed by CPU 35, and the baseband unit 34 is controlled on the basis of the maximum rate information which is provided by CPU 35.

In the case that the portable terminal 3 selects MCS whose transmission speed is high in a static transmission environment such as a transmission environment with no fading and no change in transmission loss, energy per one bit becomes decreasing under the condition of the same transmitting power. For this reason, the desired transmission quality can not be secured in some cases, since S/N ratio (Signal to Noise ratio) per one bit is deteriorated in the case the portable terminal 3 tries to make the transmission speed high.

Then, the portable terminal 3, which selects MCS whose transmission speed is higher than the present transmission speed, tries to make the transmitting power high incidentally to the selection. If this process is repeated, the portable terminal 3 results in transmitting data always by use of the maximum transmitting power which can be used to transmit data.

Therefore, according to the variable rate uplink wireless communication system related to the present invention, it is necessary to make surface temperature not higher than the maximum allowable temperature even if the portable terminal 3 continues to transmit data by use of the maximum transmitting power.

The power amplifying unit and CPU occupy main part of internal heating volume of the portable terminal. Furthermore, ratio of output power to power consumption of a general power amplifying unit according to a usual class A amplifying circuit is about 50%. In this case, power which is equivalent to the transmitting power is changed to heat. Moreover, in the case of selecting MCS whose data rate is high, load of CPU also becomes heavy. This leads to a cause to generate a large amount of heat.

Meanwhile, it is important to make the power consumption of the portable terminal small from a view point of the uplink communication system. It has been achieved to make heat generation of a component reduced by making the power consumption low methodologically. According to, for example L TE (Long Term Evolution), data is sent through a data channel by use of the transmitting power, which is as low as possible, on the basis of the data rate for traffic which should be sent. Moreover, SC-FDMA (Single Carrier-Frequency Division Multiple Access) which uses single carrier is adopted in LTE. By the adoption of SC-FDMA, LTE intends to make the power consumption low.

The present invention has the effect to prevent the rise in temperature due to the high speed communication and the high level output. The present invention also has the effect to restrain the enlargement in size and the increase in price of the portable terminal.

This application is based upon and claims the benefit of priority from Japanese Patent Application No. 2008-202503, filed on August 6, 2008, the disclosure of which is incorporated herein in their entirety by reference.

## Claims

1. A wireless communication apparatus, comprising:
a sensing means for sensing internal temperature; and
a control means for carrying out a procedure to transmit first data to a base station in the case that said internal temperature becomes not lower than a predetermined first threshold level, and to set a first communication parameter on the basis of a first response which said base station issues in reply to said first data.

2. The wireless communication apparatus according to claim 1, wherein said first communication parameter is transmitting speed which is used in communication from said wireless communication apparatus to said base station.

3. The wireless communication apparatus according to claim 2, wherein said first data includes information on the maximum transmitting speed which can be used to transmit data to said base station.

4. The wireless communication apparatus according to claim 1, wherein said first communication parameter is transmitting power which is used in communication from said wireless communication apparatus to said base station.

5. The wireless communication apparatus according to claim 4, wherein said first data includes information on the maximum transmitting power which can be used to transmit data to said base station.

6. The wireless communication apparatus according to any one of claim 1 to claim 5,
wherein said control means sets said first communication parameter of said wireless communication apparatus on the basis of a direction from said base station to set MCS (Modulation and Coding Scheme).

7. A wireless communication apparatus, comprising:
a sensing means for sensing internal temperature; and
a control means for transmitting first data to a base station in the case that said internal temperature becomes not lower than a predetermined first threshold level, and for setting a first communication parameter on the basis of a response which said base station issues in reply to said first data, and for transmitting second data to said base station in the case that said internal temperature becomes not lower than a predetermined second threshold level, and for setting a second communication parameter on the basis of a response which said base station issues in reply to said second data.

8. The wireless communication apparatus according to claim 7, wherein said first communication parameter is transmitting speed which is used in communication from said wireless communication apparatus to said base station.

9. The wireless communication apparatus according to claim 8, wherein said first data includes information on the maximum transmitting speed which can be used to transmit data to said base station.

10. The wireless communication apparatus according to claim 7, wherein said first communication parameter is transmitting power which is used in communication from said wireless communication apparatus to said base station.

11. The wireless communication apparatus according to claim 10,
wherein said first data includes information on the maximum transmitting power which can be used to transmit data to said base station.

12. The wireless communication apparatus according to any one of claim 7 to claim 11,
wherein said second communication parameter is transmitting speed which is used in communication from said wireless communication apparatus to said base station.

13. The wireless communication apparatus according to claim 12,
wherein said second data includes information on the maximum transmitting speed which can be used to transmit data to said base station.

14. The wireless communication apparatus according to claim 12 or claim 13,
wherein transmitting speed of said second data is lower than transmitting speed which is set to said base station at the time of said internal temperature becomes not lower than said predetermined second threshold level.

15. The wireless communication apparatus according to any one of claim 7 to claim 11,
wherein said second communication parameter is transmitting power which is used in communication from said wireless communication apparatus to said base station.

16. The wireless communication apparatus according to any one of claim 7 to claim 11,
wherein said second data is transmitting power which is used in communication from said wireless communication apparatus to said base station.

17. The wireless communication apparatus according to claim 15 or claim 16,
wherein transmitting power of said second data is lower than transmitting power which is set to said base station at the time of said internal temperature becomes not lower than a predetermined second threshold level.

18. The wireless communication apparatus according to any one of claim 7 to claim 17,
wherein said control means sets said first communication parameter and said second communication parameter on the basis of a direction from said base station to set MCS (Modulation and Coding Scheme).

19. The wireless communication apparatus according to any one of claim 7 to claim 18,
wherein temperature corresponding to said first threshold level is lower than temperature corresponding to said second threshold level.

20. A wireless communication system comprising a wireless communication apparatus which is described in any one of claim 1 to claim 19, and said base station.

21. A wireless communication method, comprising:
sensing internal temperature;
transmitting first data to a base station in the case that said internal temperature becomes not lower than a predetermined first threshold level; and
setting a first communication parameter on the basis of a first response which said base station issues in reply to said first data.

22. A wireless communication method, comprising:
sensing internal temperature;
transmitting first data to a base station in the case that said internal temperature becomes not lower than a predetermined first threshold level;
setting a first communication parameter on the basis of a response which said base station issues in reply to said first data;
transmitting second data to said base station in the case that said internal temperature becomes not lower than a predetermined second threshold level; and
setting a second communication parameter on the basis of a response which said base station issues in reply to said second data.

23. A computer-readable storage medium which stores a control program of a wireless communication apparatus for making a computer carry out:
a process of making a sensing means sense internal temperature; and
a process of making a control means transmit first data to a base station in the case that said internal temperature becomes not lower than a predetermined first threshold level, and of making said control means set a first communication parameter on the basis of a response which said base station issues in reply to said first data.

24. A computer-readable storage medium which stores a control program of a wireless communication apparatus for making a computer carry out:
a process of making a sensing means sense internal temperature; and
a process of making a control means transmit first data to a base station in the case that said internal temperature becomes not lower than a predetermined first threshold level, and of making said control means set a first communication parameter on the basis of a response which said base station issues in reply to said first data, and of making said control means transmit second data to said base station in the case that said internal temperature becomes not lower than a predetermined second threshold level, and of making said control means set a second communication parameter on the basis of a response which said base station issues in reply to said second data.
